# EUROPEAN PATENT SPECIFICATION

(11) **EP 3 649 397 B1**
(45) Date of publication and mention of the grant of the patent: **30.03.2022**
(21) Application number: 18827957.4
(22) Date of filing: 06.07.2018
(51) Int. Cl.: F21S 2/00, B25J 9/00, B25J 15/00, B64C 39/02, F21S 8/08, F21V 19/04, F21W 111/02, F21W 131/103

(54) **AIRBORNE SYSTEM FOR REPLACING MODULAR LIGHTING LUMINAIRE**
LUFTGESTÜTZTES SYSTEM ZUM AUSTAUSCH VON MODULAREN BELEUCHTUNGSLEUCHTEN
SYSTÈME AÉROPORTÉ POUR REMPLACER UN LUMINAIRE D'ÉCLAIRAGE MODULAIRE

(30) Priority: 06.07.2017 SE 1750889
(43) Date of publication of application: 13.05.2020
(73) Proprietor: Strihl Scandinavia AB, 434 37 Kungsbacka (SE)
(72) Inventor: CARLÉN, Eddie, SE-439 94 Onsala (SE)
(74) Representative: Ström & Gulliksson AB
(86) International application number: PCT/SE2018/050741
(87) International publication number: WO 2019/009797

(56) References cited:
- WO-A1-2013/115722
- WO-A1-2013/115722
- CN-A- 105 563 496
- CN-A- 105 563 496
- CN-A- 106 524 019
- CN-A- 106 524 019
- US-A1- 2015 035 437
- US-A1- 2015 035 437
- US-A1- 2016 362 180

## Description

### Technical field

The present disclosure relates to an airborne system for replacing modular lighting luminaire comprising a lighting module having a light source and a socket module which is configured to be attached to a luminaire support wherein the lighting module may be releasable connected to the socket module.

### Background art

Replacement of light bulbs in street light fittings are traditionally handled by a person that is lifted to the street light fitting and by hand opens up the light fitting and next replaces the light source. This is problematic in several aspects. The most obvious aspect is that the person performing this operation is exposed to risks of injury due to that the work is carried out at significant height. Another problem with having personnel lifted at height in the vicinity of lampposts is, in those cases these lampposts are found in the vicinity of overhead lines, that overhead lines generally are uninsulated and thus are highly dangerous to contact. A further disadvantage is that manual replacement of the light sources is time consuming.

Recently, modular street light luminaire has been developed. Such modular street light luminaire may comprise a socket module which is attached to a lamppost and a lighting module with a protective housing that encloses a light source. The lighting module is removable attachable to the socket module so that it may be removed and replaced with a new lighting module in few actions. An example of a modular street light luminaire is disclosed in WO2013115722A1.

To avoid at least some of the initially described drawbacks of manual handling of street light luminaire, a remotely operated lorry based system for replacing street light luminaire has been developed. The system is described in WO2013115721A1 and is based on a robot with grip claws that is carried on an extendable arm on a lorry. In operation the driver of the lorry may remotely control the robot to remove and replace modular street light luminaire on the end of a lamppost. However, while proven effective and reliable, there are still drawbacks with the system of WO2013115721A1. In particular due to that the lorry may present an obstruction to the traffic in the street where it operates. It may further be complicated to manoeuvre the lorry in narrow streets or residential areas. The system is also relatively costly since it involves an expensive vehicle and several expensive components such as the robot and the extendable arm.

CN106524019 relates to maintenance of street lights and describes how a cylindrical lamp module 7 with a light source 1 with a rod shaped electrical contact 15 may be mounted in a cylindrical socket module 13 that is arranged on a lamp pole. Mounting of the lamp module 7 in the socket module 13 may be performed by a Unmanned Aerial Vehicle. However, a disadvantage of CN106524019 is that it comprises a complicated locking device for locking the lamp module 7 to the socket module 13. In detail, the locking device comprises a spring biased support 3 with two steel spheres 2 that are configured to cooperate with two sphere-shaped recesses 10 in the lamp module 1. To unlock the lamp module 7 from the socket module 13, an electromagnet 6 is used to force the support 3 downwards against the action of the spring 4 to release the spheres 2 from the recesses 10 in the lamp module. Since the locking device is arranged in the socket module 13 it is not accessible for the UAV and it is therefore necessary to utilize personnel on the ground for switching the power to the electromagnet on or off. This increases the cost for maintenance of street lights.

In further development it has shown that it is difficult to control the UAV with very high precision during mounting of a lighting module onto a socket module. Even a small misalignment between the socket module and the lighting module may result damage to the lighting module as the UAV descends onto the socket module.

Thus, it is an object of the present disclosure to provide a system for replacing modular lighting luminaire that solves or at least mitigates one of the problems. In particular it is an object of the present to provide an effective and flexible system for replacing modular lighting luminaire. Yet a further object of the present disclosure it to provide a system for replacing modular lighting luminaire that is easy to operate and may be realized and operated at low cost. A further object is to provide a simple system for replacing modular lighting luminaire that may be operated with a minimum of personnel. Moreover, it is an object of the present disclosure to provide a system for replacing modular lighting luminaire that allows for simple mounting of a lighting module onto a socket module. A further object of the present disclosure is to provide a system for replacing modular lighting luminaire in which the unmanned aerial vehicle easily and reliable may be operated to engage a lighting module and to disconnect the lighting module from the socket module.

### Summary of the disclosure

According to the present disclosure at least one of the aforementioned objects is met by a system for airborne replacement of modular lighting luminaire according to appended claim 1.

The system for replacing modular lighting luminaire according to the present disclosure relies on the insight that a lighting module of modular lighting luminaire, in particular street light luminaire, may be attached or detached from a socket module on e.g. a lamppost, by an unmanned aerial vehicle (UAV). The UAV may fly to a street light luminaire that needs service, disconnect the lighting module that contains the light source from a socket module on the lamppost and transport the disconnected lighting module to a service location. Subsequently, the UAV may return with a replacement lighting module and attach it to the socket module on the lamppost. The entire replacement process, including unlocking and disconnecting the lighting module from the socket module, is performed through the air which results in an fast and effective system for replacing street lighting luminaire since the system is independent of the traffic situation on the road or the need for long devious routes to reach the lighting luminaire that needs service.

In particular, the system for replacing modular lighting luminaire according to the present disclosure comprises a releasable locking means for releasable locking the socket module and the lighting module to each other. This releasable locking means is arranged in the lighting module. This makes the locking means accessible for the UAV which in turn allows the engagement means of UAV to be configured disconnect the lighting module 200 from the socket module 300 or connect the lighting module 200 with the socket module 300 without assistance of personnel on the ground.

In an embodiment, the unmanned aerial vehicle 500 comprises a first and a second engagement means 530.1, 530.2. The engagement means 530.1, 530.2 are arranged on opposite sides of the unmanned aerial vehicle 500 and comprises an elongate engagement portion 532.1, 532.2 for engaging the lower side 214 of the lighting module 200.

The engagement means 530.1, 530.2 are thereby arranged to be pivoted around a vertical rotation axis Y from a position A in which the engagement portions 532.1, 532.2 extend outside the lower side 214 of the lighting module 200 to a position B in which the engagement portions 532.1, 532.2 at least partially extend over the lower side 214 of the lighting module 200 and thereby engages the lighting module 200.

This provides for easy engagement of the lighting module. Since the engagement portions pivot in a plane, they occupy little space, are easy to move into position and secure the lighting module to the UAV with high reliability.

In an embodiment, the locking means 240.1, 240.2 is movable between a locked position C in which the locking means 240.1, 240.2 is in locking engagement with a lower side 322 of the socket module 300 and a released position D in which the locking means 240.1, 240.2 is out of engagement with the lower side 322 of the socket module 300. The engagement means 530.1, 530.2 thereby comprises at least one release actuator 600.1, 600.2 that is arranged to move the locking means 100 from the locked position C to the released position D.

Since the release actuator is provided on the engagement means, the total construction occupies little space. Preferably, the release actuator 600.1, 600.2 is arranged on the engagement portion 532.1, 532.2 of the engagement means 530.1, 530.2. This ensures that the release actuator is in optimal position for unlocking the lighting module from the socket module.

In an embodiment, the engagement means 530.1, 530.2 comprises a guide element 700.1, 700.2 for guiding the position of the lighting module 200 relative the socket module 300 during mounting the lighting module 200 onto the socket module 300. The guide element 700.1, 700.2 has a front face 701 and a rear face 702 and is arranged on the engagement elements 530.1, 530.2 such that when the engagement means 530.1, 530.2 are in position A the front face 701 is facing away from the center axis Q of the lighting module 200 and the rear face is facing the center axis Q of the lighting module 200, and when the engagement means 530.1, 530.2 are in position B, the front face 701 is facing the front portion 211 of the lighting module 200 and the rear face 702 is facing the rear portion 212 of the socket module 100.

During mounting of the lighting module 200 on the socket module 300, the rear face 702 of the guide element 700.1, 700.2 is at least partially in contact with a front support surface 325 of the socket module 300 and thereby prevents the front portion 211 of the lighting module 200 from contacting the socket module 300. This greatly reduces the risk of damaging the cover glass of the lighting module and makes mounting of the lighting module onto the socket module faster and more efficient.

Further alternatives and advantages of the present disclosure are disclosed in the following description and in the appended claims.

### Brief description of the drawings

Figure 1: A side view drawing of a modular lighting luminaire of the system of the present disclosure.
Figure 2: A perspective drawing in a view from below of a lighting module of a modular lighting luminaire according of the system of the present disclosure.
Figure 3: A side view drawing of a socket module of a modular lighting luminaire according of the system of the present disclosure.
Figure 4: A perspective drawing in a view from below of a modular lighting luminaire according of the system of the present disclosure.
Figure 5: A schematic drawing of a control unit for controlling an unmanned aerial vehicle of the system according to the present disclosure
Figure 6: A perspective drawing of an unmanned aerial vehicle of the system according to the present disclosure.
Figure 7: A perspective drawing in a view from below of the unmanned aerial vehicle of the system according to the present disclosure
Figures 8 - 15: Perspective drawings showing the function of the engagement means of the unmanned aerial vehicle when connecting a lighting module and socket module of a modular lighting luminaire.

### Detailed description of embodiments

The system for airborne replacement of modular lighting luminaire according to the present disclosure will now be described more fully hereinafter. The system for replacing modular lighting luminaire according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description. In the following description the system for replacing modular lighting luminaire may be denominated the "system"

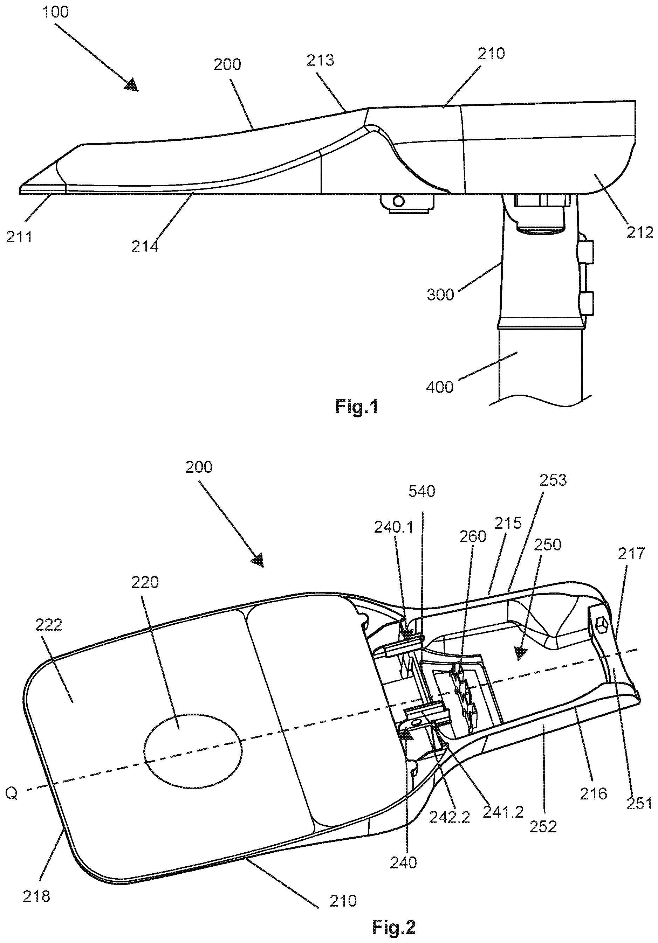

Figure 1 shows a modular street lighting luminaire 100 comprising a lighting module 200 and a socket module 300 that are connected to each other. Also indicated in figure 1 is a portion of a luminaire support 400 to which the socket module 300 is attached. The luminaire support 400 is attached to the ground (not shown) and may be in the form of a lamppost such as an elongate pipe or rod. The modular lighting luminaire is configured for outdoor use. The lighting module 200 comprises an elongate housing 210 having an upper side 213, a lower side 214 and a front portion 211 which comprises a light source (not shown) in the form of one or more lightbulbs or LED or the like. The light source is arranged on the lower side 214 of the elongate housing. The rear portion 212 of the housing 210 is connected to the socket module 300. Thus in operation, as shown in figure 1, the lower side 214 of the housing 210 is directed towards the luminaire support 400 and thus towards the ground so that light from the light source is directed towards the ground. The upper side 214 of the housing 210 is directed oppositely away from luminaire support 400 and thus away from the ground.

Figure 2 shown the lighting module 200 in perspective view from below. The elongate housing has a rear end 217, a front end 218 and two opposite elongate sides 215, 216 extending between the rear end 217 and the front end 218. A longitudinal center axis Q of the lighting module 200 extends between the elongate sides 215, 216 and from the rear end 217 and the front end 218. The front portion of the housing 210 comprises the light source 220 which may be covered by a protective transparent layer 222, e.g. glass. The rear portion of the housing 210 comprises a receiving space 250 for receiving a receiving part 320 of the socket module 300 (as will be described hereinafter). The receiving space 250 is a recess which is limited by two opposite side walls 252, 253, which extends parallel with the elongate sides 215, 216 of the housing, and a rear wall 251 in the rear end 217 of the housing 210. The receiving space 250 may further be limited by a front wall 254 which extends between the opposite side walls 252, 253 and parallel with the rear wall 251. The receiving space 250 is open towards the lower side 214 of the housing 210 (see fig 1) to allow the receiving part 320 of the socket module 300 to be received in the receiving space 250. The upper side 213 of the housing 210 forms an upper wall of the receiving space 250 (see fig 1). A first electric contact 260 is arranged in the receiving space 250. The first electrical contact is electrically connected to the light source.

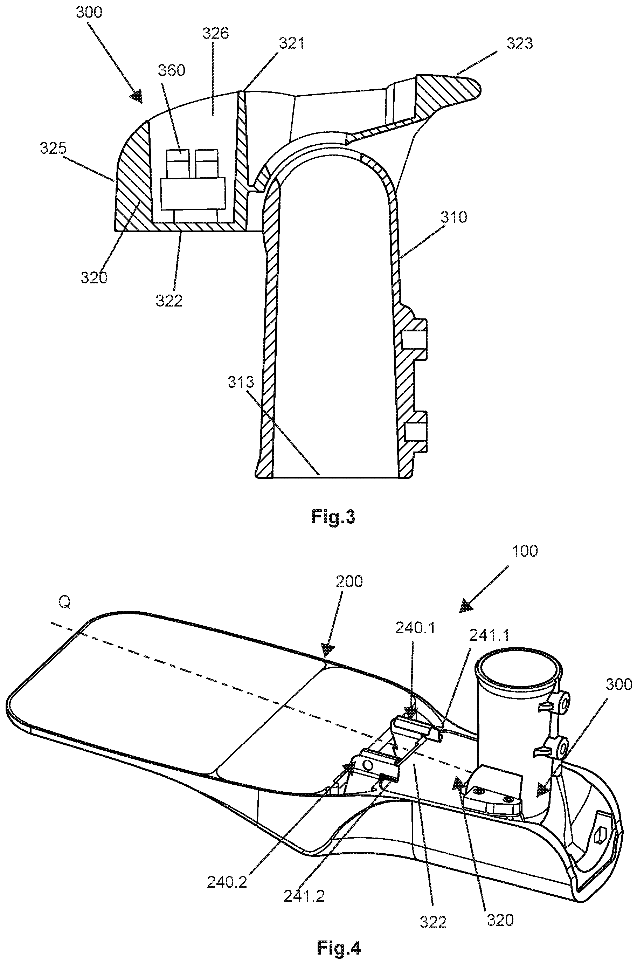

The lighting module 200 further comprises a locking means 240.1, 240.2 for releasable locking the lighting module 200 to the socket module 300 when the first and the socket modules are connected. In the embodiment of figure 2 the lighting module 200 comprises a first and a second a locking means 240.1, 240.2. However, one locking means may suffice. The locking means 240.1, 240.2 comprises a respective protruding element 241.1, 241.2, such as a latch or tongue that may rest on the lower side 322 of the receiving part 320 (as will be described under figure 4). For example, the locking means 240.1, 204.2 may be integrally formed by e.g. a sheet of spring steel and may comprise a respective fastening portion 242.1, 242.2 that is attached to and extends from the inner surface of the upper side 213 of the housing 210. The protruding portion 241.1, 241.2 extends from the respective fastening portion 242.1, 242.2. The locking means 240.1, 240.2 may be biased towards the longitudinal center axis Q of the lighting module 200 such that when the locking means 240.1, 240.2 are subjected to a pulling force away from the center axis Q, the locking means 240.1, 240.2 may flex outwards towards the elongated sides 215, 216 of the housing 210 of the lighting module 200 and come out of contact with a lower side 322 of the receiving part 320 (see figure 4).

Figure 3 shows the socket module 300 which comprises a socket 310 having a lower side 312 which may be attached to a luminaire support, such as a lamppost. A receiving part 320 for releasable engagement with the lighting module 200 is attached to the socket 310. The receiving part 320 further has a flat lower side 322. The receiving part 320 is configured such that its contour and dimensions approximately corresponds to the contour and the dimensions of the receiving space 250 in the lighting module 200. Thus, the receiving part 320 and the receiving space 250 are configured with regards to each other such that the receiving part 320 may be received with a form fit in the receiving space 230. Notable is that the rear portion of the receiving part 320 comprises a protruding part 323 which is configured to contact the rear wall 251 of the engagement space 250 to guide the movement of the lighting module 200 during connection of the lighting module 200 and the socket module 300. The front portion of the receiving part comprises a substantial vertical support surface 325. The socket module 300 further comprises a second electric contact 360, which may be connected to a source of electric current. The electrical contact 360 may be arranged in a recess 326 in the receiving part. The recess 326 opens to upper side 321 of the receiving part. When the lighting module and the socket module are connected, the first electric contact 260 in the lighting module 200 and the second electric contact in the socket module 300 are in electrical contact and electric current may be supplied to the light source 220 in the lighting module 200. The first electric contact 260 in the lighting module may be a female contact and the second electric contact 360 in the socket module may be a male contact, or vice versa.

Figure 4 shows the modular lighting luminaire 100 in a view from below when the lighting module 200 and the socket module 300 are connected. That is, the receiving part 320 of the lighting module 300 is received in the receiving space 250 of the lighting module 200. In this situation, the locking means 240 on the lighting module 200 are in releasable locking engagement with the socket module 200. Thus, the protruding elements 241.1, 241.2 of the respective locking means 240.1, 240.2, rests on the lower side 322 of the receiving part 320. As described under figure 2, the locking means 240.1, 240.2 are biased towards the longitudinal center axis Q of the lighting module 200 such that when the locking means 240.1, 240.2 are subjected to a pulling force away from the center axis Q, the locking means 240.1, 240.2 may flex outwards towards the elongated sides 215, 216 of the housing 210 of the lighting module 200 and come out of contact with the lower side 322 of the receiving part 320.

The housing 210 of the lighting module 200 and the socket 310 and the receiving part 320 of the socket module 300 preferably made of metal, such as alumina. Since the modular lighting luminaire is intended for outdoor use, the housing 310 and socket module 300 are of robust dimensions and weight. The housing 310 may weigh 5 - 10 kg.

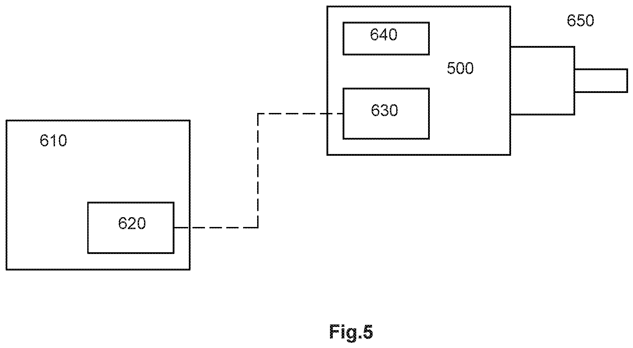

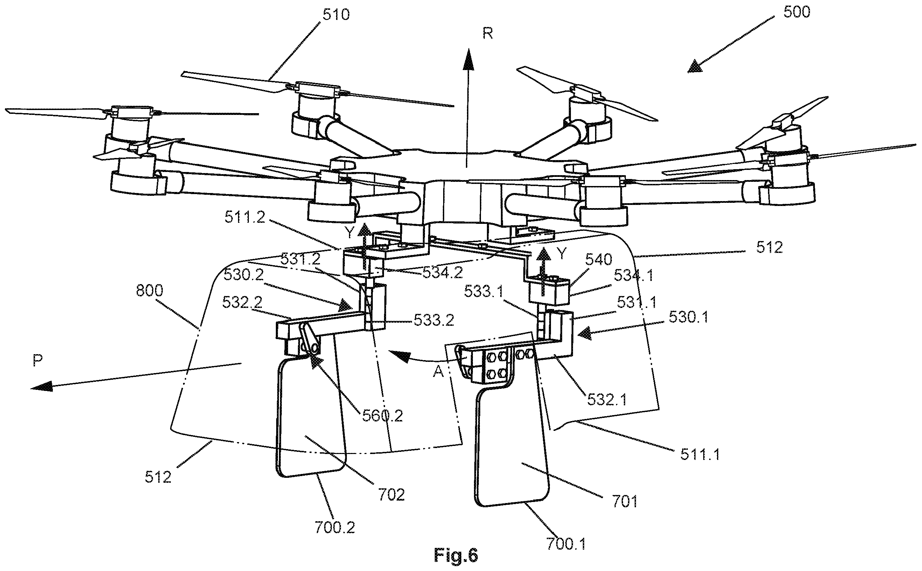

Turning to figure 5, the system for replacing lighting luminaire further comprises an unmanned aerial vehicle (UAV) that comprises an engagement means for engaging the lighting module of the modular lighting luminaire. The UAV 500 is indicated schematically in figure 5 but will be described in detail in figure 6. The UAV 500 may be a single-, dual- or multirotor UAV (such as is known in the art) and may be controlled remotely by a human operator or a computer on the ground. The system for replacing lighting luminaire further comprises a control unit 600 which may have an operator interface 610 which is configured to allow a human operator to control the UAV 500. For example to control the flight path and actuation of various means on the UAV. Conventional UAVs typically comprises these types of control systems and the control system will therefore only be briefly described. The operator interface 610 may for example comprise a joystick and/or a keyboard that allows a human operator to input manual control commands to steer and control functions of the UAV. The operators interface 610 may also comprise a display. The operator interface 610 is connected to a transmitter/receiver unit 620 for wireless communication with a transmitter/receiver unit 630 on the UAV 500. The transmitter/receiver unit 630 is further connected to an electronic controller 640 on the UAV which in turn is connected to operational features of the UAV such as navigational systems and motors for rotors and rudders or actuators for engagement means. The electronic controller 640 is configured to receive information from the operator interface and in dependency thereof control the performance of operational features of the UAV. The UAV 500 may also comprise camera 650, such a digital video camera which allows the operator to visually see the surroundings of the UAV on the display on the operator interface 610. This makes possible for the operator to control the UAV from a further remote position during detachment/attachment of a lighting module 200 from the socket module 300. The operator of the UAV may also be in a remote position in which the operator has direct visual contact with the UAV during detachment/attachment of a lighting module 200 from the socket module 300.

Figure 6 shows an UAV 500 according to an embodiment of the present disclosure. The UAV is a multi-rotor UAV and comprises eight rotors 510. The rotors 510 defines an upper side of the UAV 500. It is advantageous that the UAV has several rotors since it increases lifting strength and maneuverability of the UAV. The multi-rotor UAV is capable of hovering in the air above an object and to move in any direction through the air. A longitudinal center axis P of the UAV extends between the longitudinal sides of the UAV from the rear end 540.1 and to the front end 540.2 of the UAV. When the UAV engages a lighting module (not shown) the longitudinal center axis P of the UAV corresponds (i.e. overlaps) to center axis Q of the luminaire module. A vertical center axis R extends through the upper side of UAV and is orthogonal to the longitudinal center axis P.

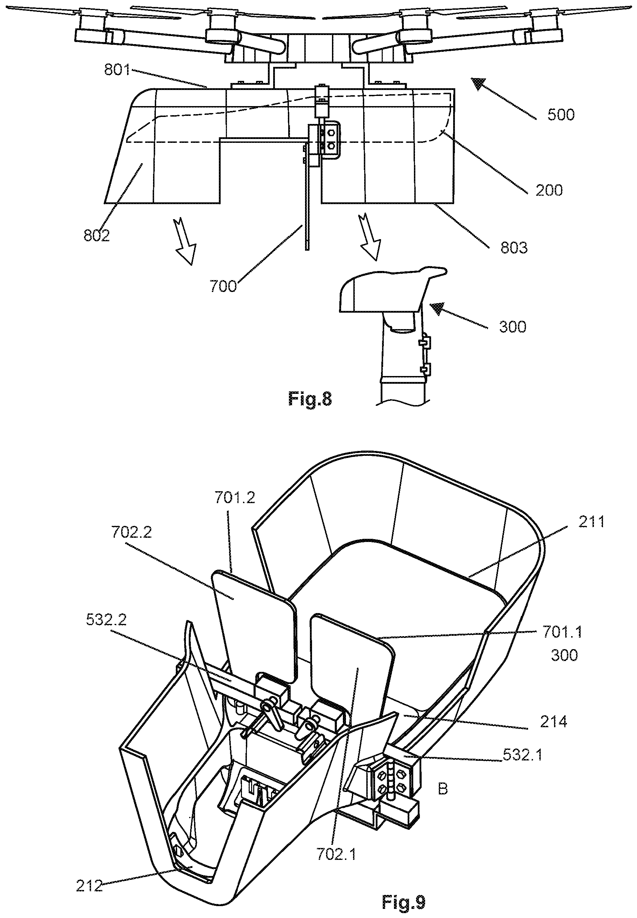

The UAV may comprise a cage 800 with a top wall 801, a circumferential wall 802 and an open bottom 803 hat faces downwards (see figure 8). The cage 800 is configured to receive the housing 210 of the lighting module 200 (not shown).

The UAV 500 comprises an engagement means 530.1, 530.2 having an elongate engagement portion 532.1, 532.2 for engaging a lighting module 200 (not shown). In the embodiment shown in figure 5 the UAV 500 comprises a first and a second engagement means 530.1, 530.2 each having an elongate engagement portion 532.1, 532.2 for engaging a lighting module 200 (not shown). The first and the second engagement means 530.1, 530.2 are arranged on opposite sides of the UAV and spaced apart such that a lighting module (not shown) may be received between the first and the second engagement means 530.1, 530.2. In the described embodiment each engagement means 530.1, 530.2 comprises a stem portion 531.1, 531.2 that extends in direction downwards from the UAV, i.e. in direction away and downwards with regards to the upper side of the UAV. Thus, the stem portion 531.1, 531.2 may extend substantially vertically downwards from the UAV 500. The stem portions 531.1, 531.2 of the first and the second engagement means 530.1, 530.2 may be arranged to extend from a respective carrier 540 on opposite sides of the UAV. The engagement portion 532.1, 532.2 extends substantially orthogonally from the respective stem portion 531,1, 531.2 (i.e. from the distal portion thereof). For example, the engagement means 530.1, 530.2 may be L-shaped and formed by bars of ridged material, such as metal.

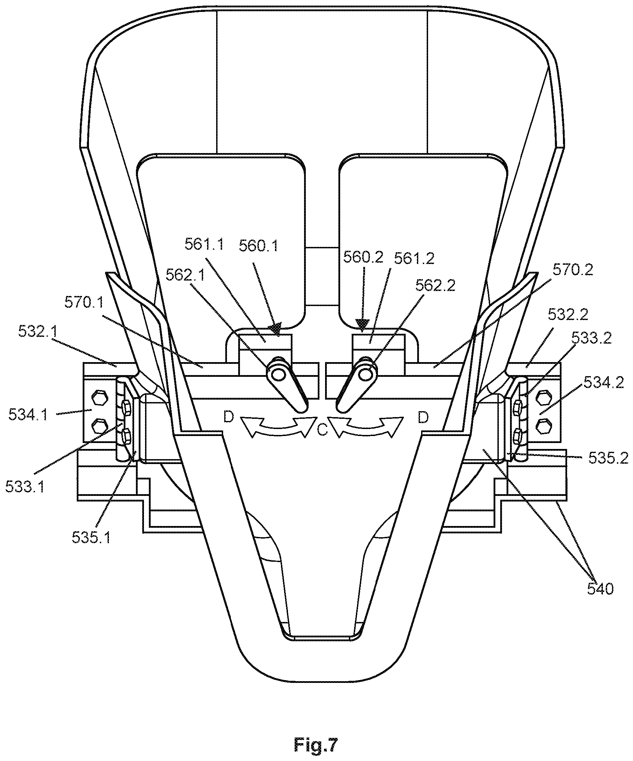

The engagement portions 532.1, 532.2 are configured to engage a lighting module 200 and secure the lighting module to the UAV during flight. The engagement portions 532.1, 532.2 are there of such length that they respectively approximately extend over half the width of the lighting luminaire. The upper surface of the engagement portions 532.1, 532.2 is substantially flat in order to abut against the lower side 214 of the lighting module. In a lifting operation the lighting module 200, the engagement portions 532.1, 532.2 holds the lighting module 200 within the cage 800 and prevents it from falling out of the open bottom 803. A release actuator 560.1, 560.2 for the locking means 240 (see figure 7) is attached to the lower side of the engagement portions 532.1, 532.2.

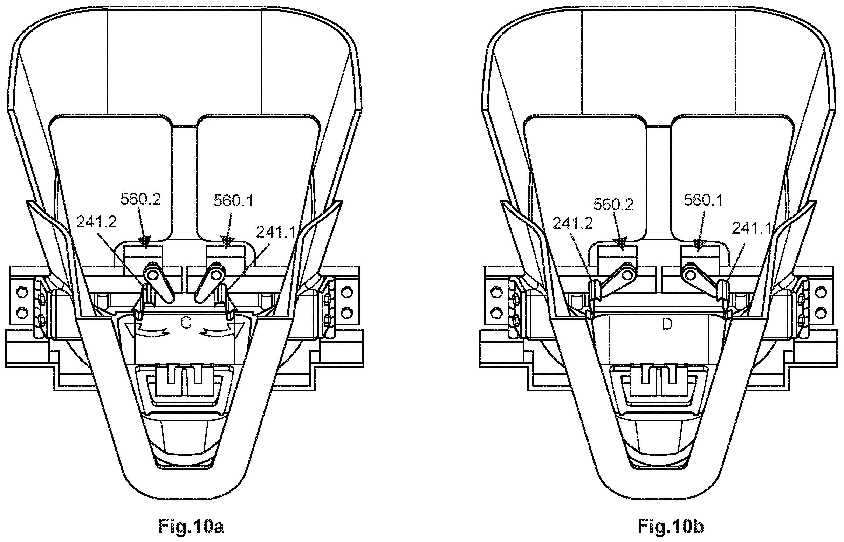

The engagement means 530.1, 530.2 are pivotally arranged to the UAV such that the engagement means 530.1, 530.2 may be pivoted around a respective vertical rotation axis Y that is parallel with the vertical center axis R of the UAV. The engagement means are thereby pivotal from a position A in which the respective engagement portion 532.1, 532.2 extends substantially parallel with, or away from the longitudinal center axis P of the UAV to a position B in which the engagement portion 532.1, 532.2 is directed towards the longitudinal center axis P of the UAV, for example orthogonal to the longitudinal center axis P. In figure 6, the engagement means 530.1, 530.2 are in position A. Figure 10 shows the engagement means 530.1, 530.2 in position B.

The UAV comprises a first and second vertical rotation shaft 533.1, 533.2, which is arranged to pivotally couple the engagement means 530.1, 530.2 to the UAV. In the embodiment of figure 6, the vertical rotation shafts 533.1, 533.2 couples the engagement means 530.1, 530.2 to a carrier 540 that is arranged on the UAV. The rotation shafts 533.1, 533.2 thereby forms the pivot axis Y. The UAV further comprise a first and a second drive unit 534.1, 534.2, such as an electrical motor, for pivoting the engagement means 530.1, 530.2 around the respective rotation axis Y.

In the embodiment shown in figure 6, the stem portions 531.1, 531.2 are attached to a respective vertical rotation shaft 533.1, 533.2 and the respective first and second drive unit 534.1,534.2 are arranged to rotate the rotation shafts 533.1,533.2 around the rotation axis Y and thereby pivot the engagement means 530.1, 530.2. As described, the engagement portion 532.1, 532.2 extends orthogonal from the vertical stem portion 531.1, 531.2. Therefore, when the engagement means 530.1, 530.2 are pivoted, or rotated, around the vertical rotation axis Y, the engagement portion 532.1, 532.2 is pivoted in a plane that is parallel with the longitudinal center axis P and orthogonal to the vertical center axis R of the UAV.

Alternatively, the engagement means may be journalled, i.e. rotationally coupled, to the rotation shafts and the drive unit may be arranged to pivot or rotate the engagement means around the rotation shaft. Turning briefly to figure 7, the rotational shafts 533.1, 533.2 are coupled to the stem portions 531.1, 531.2 of the engagement means 530.1, 530.2 and to the carrier 540 of the UAV such that a hinge is formed between the carrier 540 and the engagement means 530.1, 530.2. The rotational shafts 533.1, 533.2 are thereby coupled to a first hinge part 534.1, 534.2 and a second hinge part 535.1, 535.2. The first hinge part 534.1, 534.2 is attached to the stem portion 531.1, 531.2 of the engagement means 530.1, 530.2. and the second hinge part 535.1, 535.2 is attached to the carrier 540 of the UAV. However, the rotational shafts 533.1, 533.2 may also be directly attached to the engagement means 530.1, 530.2 .

Returning to figure 6, the UAV further comprises is a first and second guide means 700.1, 700.2 which may be elongated plates that extends vertically in direction downwards from the engagement portions 532.1, 532.2. The guide means 700.1, 700.2 has a front face 701 and a rear face 702. When the engagement portions 532 are in position A the front face 701 faces away from longitudinal center axis P and the rear face 702 faces the longitudinal center axis P.

Figure 7 shows a detailed view from below of the UAV 500. Thus, a first and a second release actuator 560.1, 560.2 is arranged on the lower side 570.1, 570.2 of the respective engagement portions 532.1, 532.2. The release actuators 560.1, 560.2 comprises respectively an actuator drive 561.1, 561.2 that is coupled to a first end of an elongated actuator rod 562.1, 562.2. The actuator rods 562.1, 562.2 are arranged such that their second free ends are directed upwards, i.e. away from the lower side 570.1, 570.2 of the engagement portions 531.1, 531.2. This allows the actuator rods 562.1, 562.2 to engage the locking means 240.1, 240.2. The actuator drives 561.1, 561.2 which may be an electrical motor is arranged to turn the first end of the respective actuator rod 562.1, 562.2 in clockwise/anti clockwise direction between a first position C and a second position D. In operation, the position C is a locked position in which the locking means 240.1, 240.2 are in locking engagement with a lower side 322 of the socket module 300 (see figure 4). That is, the protruding part 241.1, 241.2 of the locking means 240.1, 240.2 is resting on the lower surface 322 of the socket module 300. Position D is a released position D in which the locking means 240.1, 240.2 is out of engagement with the lower side 322 of the socket module 300

The function of the system according to the present disclosure will in the following be described with reference to figure 8 - 15 in which a lighting module 200 is connected to a socket module 300 .

To improve the visibility of the features described above, the lighting module 200 is seen view from below and the socket module 300 is omitted in figures 9, 10a, 10b and 14. However, the socket module 300 is visible in figures 8, 11 and 13.

Thus, figure 8 shows a situation in which an UAV 500 that carries a lighting module 200 approaches a socket module 300.

Figure 9 shows a view from below of the UAV in figure 8. Thus, the engagement means 530.1, 530.2 are pivoted into position B in which the engagement portions 532.1. 532.2 of the engagement means 530.1, 530.2 extends over the lower side of the 214 of the lighting module 200 and thereby engages the lighting module 200 and secures it to the UAV (not show). The guide elements 700.1 and 700.2 are thereby directed such that the front faces 701 are directed towards (i.e. faces) the front portion 211 of the lighting module 200 and the rear faces 702 are directed towards the rear portion 212 of the lighting module. The front and rear faces 701, 702 of the guide elements 700.1 and 700.2 thereby extend between the elongated sides 215, 216 of the housing of the lighting module in a position between the receiving space 250 and the light source 220 (these features are indicated in figure 2).

In a second step, see figure 10a, the respective release actuator 560.1, 560.2 is operated to open the locking means 240.1, 540.2 such that the receiving part 320 of the socket module 300 may be received into the receiving space 220 of the lighting module (not shown). The respective release actuator 560.1, 560.2 is thereby operated to the move the locking means 240.1, 240.2 from the closed position C of figure 10a to the open position D shown in figure 10b. The distance between the protruding parts 241.1, 241.2 of the locking means 240 is increased between the closed position C and the open position D.

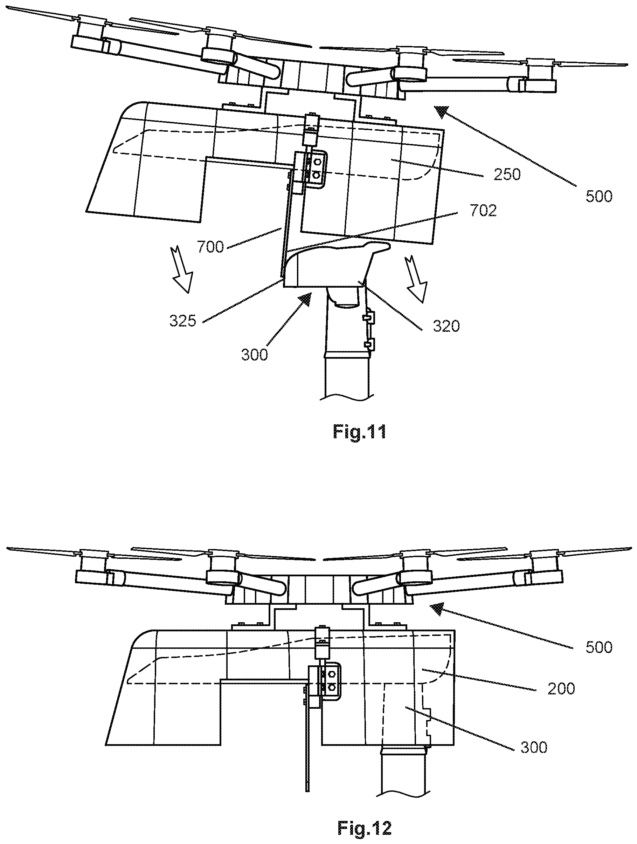

Turning to figure 11, the UAV 500 has descended towards the socket module 300 such that the rear face 702 of the guide element 700.1 bears against the front support surface 325 of the socket module 300. During further descent of the lighting module, the rear face 702 of the guide means 700.1 may be in sliding contact with the front support surface 325 of the socket module. The lighting module 200 is thereby guided such that any contact between the receiving part 320 of the socket module 300 and light source 320 or the cover glass 222 is prevented (not shown). Thereby is the risk of damage to the cover glass or light source advantageously minimized. The guide means 700.1, 700.1 further effectively guides the lighting module 200 such that the receiving space 250 of the lighting module is aligned with the receiving part 320 of the socket module. This facilitates connection between the lighting module and the socket module

Figure 12 shows the final step of mounting the lighting module 200 onto the socket module 300.

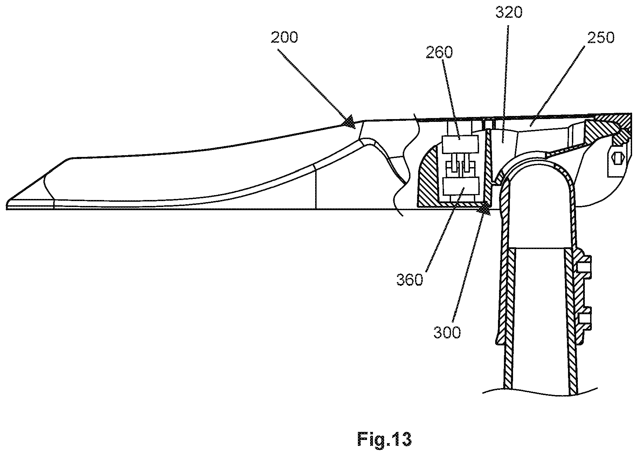

Turning to figure 13, the receiving part 320 of the socket module 300 is thereby received in the receiving space 250 of the lighting housing. During this action, the electrical contact 260 in the receiving space 250 is automatically placed in electrical connection with the electrical contact of the socket module.

Returning to figure 10a and, 10b. In a subsequent step, the release actuator 56 is operated to move the actuator rod to position C. The pre-biased locking means 240 thereby returns towards the center axis Q of the lighting module such that the protruding parts 241.1, 241.2 come into locking engagement with the lower side of the socket module 300.

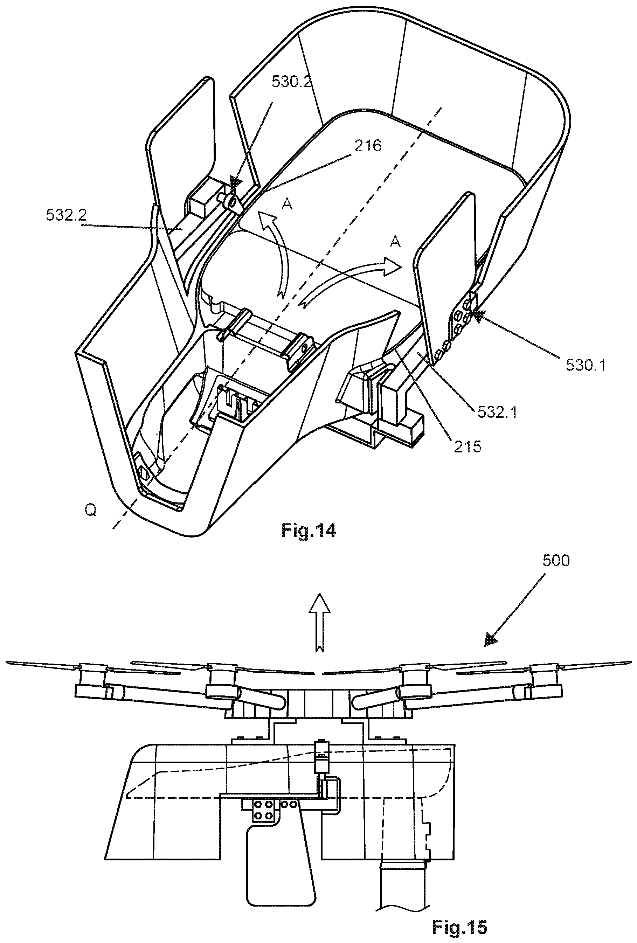

Turning to figure 14. In a subsequent step, the engagement means 530.1 530.2 are pivoted to the position A in which the engagement portions 532.1, 532.2 extend outside the lower side 214 of the lighting module 200. By "outside the lower side 214 of the lighting module" is meant that the engagement portion is outside the elongate sides 215, 216 of the lighting module. The longitudinal center axis Q of the lighting module 200 is inside the elongate sides 215, 216. The engagement portions 532.1, 532.2 may thereby extend substantially parallel with, or away from, the center axis Q of the lighting luminaire 200. Turning to figure 15, the UAV 500 may now leave the lighting luminaire 200 and take off.

It is appreciated that disconnection of a lighting module 200 from a socket module 300 is performed as described above but in reversed order.

Although a particular embodiment has been disclosed in detail this has been done for purpose of illustration only, and is not intended to be limiting. In particular it is contemplated that various substitutions, alterations and modifications may be made within the scope of the appended claims.

The described embodiment the system for replacing modular lighting luminaire relates to street light luminaire, or street lighting luminaire. However, it is appreciated that the system for replacing lighting luminaire of the also is suitable for other modular lighting luminaire such as modular luminaire for sports stadiums, tunnels, power towers, bridges, rail roads, airports and so on..

Moreover, although specific terms may be employed herein, they are used in a generic and descriptive sense only and not for purposes of limitation. Furthermore, as used herein, the terms "comprise/comprises" or "include/includes" do not exclude the presence of other elements. Finally, reference signs in the claims are provided merely as a clarifying example and should not be construed as limiting the scope of the claims in any way.

## Claims

1. A system for airborne replacement of modular lighting luminaire, said system comprising a lighting luminaire (100) comprising a lighting module (200) and a socket module (300) configured to be releasably connected to each other, wherein:
- the socket module (300) comprises a socket (310) configured to be attached to a luminaire support (400) and a receiving part (320) configured to be received in a receiving space (250) of the lighting module (200) and an electric contact (360) configured to be connected to a source of electric current;
- the lighting module (200) comprises an elongate housing (210) having an upper side (213) and a lower side (214) and; a front portion (211) with a light source (220) and a rear portion (212) with the receiving space (250) for releasably receiving the receiving part (320) of the socket module (300) thereby connecting the lighting module (200) with the socket module (300) and an electrical contact (260) connected to the light source (220) and wherein;
- the lighting module (200) comprises a releasable locking means (240.1, 240.2), arranged in the housing (210) for releasably locking the lighting module (200) to the socket module (300);
**characterized in that** the system further comprises;
an unmanned aerial vehicle (500) configured to be controlled remotely and comprising an engagement means (530.1, 530.2) configured to engage the lighting module (200) such that the unmanned aerial vehicle (500) may disconnect the lighting module (200) from the socket module (300) or connect the lighting module (200) with the socket module (300), and **in that** the engagement means (530.1, 530.2) of the unmanned aerial vehicle (500) is configured to release the locking means (240.1, 240.2) from locking engagement with the socket module (300).

2. The system according to claim 1, wherein the receiving part (320) of the socket module (300) comprises a lower side (322) and wherein the locking means (240.1, 240.2), in a state of locking engagement with the socket module (300), rests on the lower side (322) of the receiving part (320) and, in a released state, is out of contact with the lower side of the receiving part (320).

3. The system according to claim 1 or 2, wherein the unmanned aerial vehicle (500) comprises a first and a second engagement means (530.1, 530.2), wherein;
- the engagement means (530.1, 530.2) are arranged on opposite sides of the unmanned aerial vehicle (500) and comprises an elongate engagement portion (532.1, 532.2) for engaging the lower side (214) of the lighting module (200) wherein;
- the engagement means (530.1, 530.2) are arranged to be pivoted around a respective vertical pivot axis (Y) from a position (A) in which the engagement portions (532.1, 532.2) extend outside the lower side (214) of the lighting module (200) to a position (B) in which the engagement portions (532.1, 532.2) at least partially extend over the lower side (214) of the lighting module (200) and thereby engages the lighting module (200).

4. The system according to claim 3, wherein the unmanned aerial vehicle (500) comprises a first and second vertical rotation shaft (533.1, 533.2), forming the pivot axis (Y), which are arranged to pivotally couple the engagement means (530.1, 530.2) to the unmanned aerial vehicle (500) and a drive unit (534.1, 534.2) for pivoting the engagement means (530.1, 530.2) around the respective rotation axis (Y).

5. The system according to claim 4, wherein the engagement means (530.1, 530.2) are attached to the respective first and second vertical rotation shaft (533.1, 533.2) and wherein the drive unit (534.1, 534.2) is arranged to rotate the first and second vertical rotation shaft (533.1, 533.2).

6. The system according to claim 4, wherein the engagement means (530.1, 530.2) are journalled to the respective first and second rotation shaft (533.1, 533.2) and wherein the drive unit (534.1, 534.2) is arranged to rotate the first and second engagement means (530.1, 530.2) around the first and second rotation shaft (533.1, 533.2).

7. The system according to anyone of claims 3 - 6, wherein the engagement means (530.1, 530.2) comprises, respectively, an elongated stem portion (531.1, 531.2) and an engagement portion (532.1, 532.2) that extends substantially orthogonal from the stem portion (531.1, 531.2) and is configured to at least partially extend over the lower side (214) of the lighting module (200) in position (B).

8. The system according to anyone of claims 5 or 7, wherein the engagement portions (532.1, 532.2) are pivotable in a plane that is parallel with a longitudinal center axis P of the unmanned aerial vehicle (500) and orthogonal to a vertical center axis R of the unmanned aerial vehicle (500).

9. The system according to anyone of claims 5 - 8, wherein;
- the lighting module (200) comprises a first and a second locking means (240.1, 240.2) respectively movable between a locked position (C) in which the locking means (240.1, 240.1) is in locking engagement with a lower side (322) of the socket module (300) and a released position (D) in which the locking means (240.1, 240.2) is out of engagement with the lower side (322) of the socket module (300) and wherein;
- the engagement means (530.1, 530.2) respectively comprises a release actuator (560.1, 560.2) that is arranged to move the locking means (240.1, 240.2) from the locked position (C) to the released position (D).

10. The system according to claim 8, wherein the release actuators (560.1, 560.2) respectively are arranged on the engagement portion (532.1, 532.2) of the engagement means (530.1, 530.2).

11. The system according to anyone of claims 5 - 9, wherein the first and the second engagement means (530.1, 530.2) comprises a guide element (700.1, 700.2) for guiding the position of the lighting module (200) relative the socket module (300) during mounting the lighting module (200) onto the socket module (300), wherein the guide element (700.1, 700.2) has a front face (701) and a rear face (702) and is arranged on the engagement elements (530.1, 530.2) such that when the engagement means (530.1, 530.2) are in position (A) the front face (701) is facing away from the center axis (Q) of the lighting module (200) and the rear face is facing the center axis (Q) of the lighting module (200), and when the engagement means (530.1, 530.2) are in position (B), the front face (701) is facing the front portion (211) of the lighting module (200) and the rear face (702) is facing the rear portion (212) of the socket module (100).

12. The system according to claim 11, wherein the guide element (700.1, 700.2) is a plate and is attached to, and extends substantially vertically downwards from, the engagement portion (532.1, 532.2) of the engagement means (530.1, 530.1).

13. The system according to claim 11 or 12, wherein the guide element (700.1, 700.2) is configured such that, during mounting of the lighting module (200) on the socket module (300), the rear face (702) of the guide element (700.1, 700.2) may at least partially contact a front support surface (325) of the socket module (300), thereby preventing the front portion (211) of the lighting module (200) from contacting the socket module (300).

14. The system according to anyone of claims 1 - 13, configured for replacing modular street lighting luminaire and wherein the luminaire support (400) is a lamppost.

## Patentansprüche

1. System zum Auswechseln einer modularen Beleuchtungsleuchte in der Luft,
wobei das System eine Beleuchtungsleuchte (100) umfasst, die ein Beleuchtungsmodul (200) und ein Sockelmodul (300) umfasst, die so konfiguriert sind, dass sie lösbar miteinander verbunden werden können, wobei:
das Sockelmodul (300) einen Sockel (310), der so konfiguriert ist, dass er an einem Leuchtenträger (400) befestigt werden kann, und ein Aufnahmeteil (320), das so konfiguriert ist, dass es in einem Aufnahmeraum (250) des Beleuchtungsmoduls (200) aufgenommen werden kann, und einen elektrischen Kontakt (360) umfasst, der so konfiguriert ist, dass er mit einer elektrischen Stromquelle verbunden werden kann,
wobei das Beleuchtungsmodul (200) ein längliches Gehäuse (210) mit einer Oberseite (213) und einer Unterseite (214) sowie einen vorderen Abschnitt (211) mit einer Lichtquelle (220) und einen hinteren Abschnitt (212) mit dem Aufnahmeraum (250) zur lösbaren Aufnahme des Aufnahmeteils (320) Sockelmoduls (300) aufweist und damit das Beleuchtungsmodul (200) mit dem Sockelmodul (300) und einem mit der Lichtquelle (220) verbundenen elektrischen Kontakt (260) verbindet, und wobei
das Beleuchtungsmodul (200) ein lösbares Verriegelungsmittel (240.1, 240.2) umfasst, das in dem Gehäuse (210) angeordnet ist, um das Beleuchtungsmodul (200) lösbar mit dem Sockelmodul (300) zu verriegeln;
**dadurch gekennzeichnet, dass** das System ferner ein unbemanntes Luftfahrzeug (500) umfasst, das so konfiguriert ist, dass es ferngesteuert werden kann, und ein Eingriffsmittel (530.1, 530.2) umfasst, das so konfiguriert ist, dass es mit dem Beleuchtungsmodul (200) in Eingriff kommt, so dass das unbemannte Luftfahrzeug (500) das Beleuchtungsmodul (200) von dem Sockelmodul (300) trennen oder das Beleuchtungsmodul (200) mit dem Sockelmodul (300) verbinden kann, und dass
das Eingriffsmittel (530.1, 530.2) des unbemannten Luftfahrzeugs (500) so konfiguriert ist, dass es das Verriegelungsmittel (240.1, 240.2) aus dem Verriegelungseingriff mit dem Sockelmodul (300) löst.

2. System nach Anspruch 1, wobei das Aufnahmeteil (320) des Sockelmoduls (300) eine Unterseite (322) aufweist und wobei das Verriegelungsmittel (240.1, 240.2) in einem Zustand des Verriegelungseingriffs mit dem Sockelmodul (300) auf der Unterseite (322) des Aufnahmeteils (320) aufliegt und in einem gelösten Zustand außer Kontakt mit der Unterseite des Aufnahmeteils (320) ist.

3. System nach Anspruch 1 oder 2, wobei das unbemannte Luftfahrzeug (500) ein erstes und ein zweites Eingriffsmittel (530.1, 530.2) umfasst, wobei
die Eingriffsmittel (530.1, 530.2) auf gegenüberliegenden Seiten des unbemannten Luftfahrzeugs (500) angeordnet sind und einen länglichen Eingriffsabschnitt (532.1, 532.2) zum Eingriff mit der Unterseite (214) des Beleuchtungsmoduls (200) umfassen, wobei
die Eingriffsmittel (530.1, 530.2) so angeordnet sind, dass sie um eine jeweilige vertikale Schwenkachse (Y) aus einer Position (A), in der sich die Eingriffsabschnitte (532.1, 532.2) außerhalb der Unterseite (214) des Beleuchtungsmoduls (200) erstrecken, in eine Position (B) geschwenkt werden können, in der sich die Eingriffsabschnitte (532.1, 532.2) zumindest teilweise über die Unterseite (214) des Beleuchtungsmoduls (200) erstrecken und dadurch mit dem Beleuchtungsmodul (200) in Eingriff kommen.

4. System nach Anspruch 3, wobei das unbemannte Luftfahrzeug (500) eine erste und eine zweite vertikale Drehachse (533.1, 533.2) aufweist, die die Schwenkachse (Y) bilden, die so angeordnet sind, dass sie die Eingriffsmittel (530.1, 530.2) schwenkbar mit dem unbemannten Luftfahrzeug (500) koppeln, und eine Antriebseinheit (534.1, 534.2) zum Schwenken der Eingriffsmittel (530.1,530.2) um die jeweilige Drehachse (Y).

5. System nach Anspruch 4, wobei die Eingriffsmittel (530.1, 530.2) an der jeweiligen ersten und zweiten vertikalen Drehachse (533.1, 533.2) angebracht sind und wobei die Antriebseinheit (534.1, 534.2) so angeordnet ist, dass sie die erste und zweite vertikale Drehachse (533.1, 533.2) dreht.

6. System nach Anspruch 4, wobei die Eingriffsmittel (530.1, 530.2) an der jeweiligen ersten und zweiten Drehachse (533.1, 533.2) gelagert sind und wobei die Antriebseinheit (534.1, 534.2) so angeordnet ist, dass sie die ersten und zweiten Eingriffsmittel (530.1, 530.2) um die erste und zweite Drehachse (533.1, 533.2) dreht.

7. System nach einem der Ansprüche 3 bis 6, wobei die Eingriffsmittel (530.1, 530.2) jeweils einen länglichen Schaftabschnitt (531.1, 531.2) und einen Eingriffsabschnitt (532.1, 532.2) umfassen, der sich im Wesentlichen orthogonal von dem Schaftabschnitt (531.1, 531.2) erstreckt und so konfiguriert ist, dass er sich zumindest teilweise über die Unterseite (214) des Beleuchtungsmoduls (200) in der Position (B) erstreckt.

8. System nach einem der Ansprüche 5 oder 7, wobei die Eingriffsabschnitte (532.1, 532.2) in einer Ebene schwenkbar sind, die parallel zu einer Längsmittelachse P des unbemannten Luftfahrzeugs (500) und orthogonal zu einer vertikalen Mittelachse R des unbemannten Luftfahrzeugs (500) liegt.

9. System nach einem der Ansprüche 5 bis 8, wobei
das Beleuchtungsmodul (200) ein erstes und ein zweites Verriegelungsmittel (240.1, 240.2) umfasst, die jeweils zwischen einer verriegelten Position (C), in der die Verriegelungsmittel (240.1, 240.1) in Verriegelungseingriff mit einer Unterseite (322) des Sockelmoduls (300) stehen, und einer gelösten Position (D), in der die Verriegelungsmittel (240.1, 240.2) außer Eingriff mit der Unterseite (322) des Sockelmoduls (300) sind, bewegbar sind, und wobei
die Eingriffsmittel (530.1, 530.2) jeweils ein Freigabebetätigungselement (560.1, 560.2) umfassen, das so angeordnet ist, dass es die Verriegelungsmittel (240.1, 240.2) von der verriegelten Position (C) in die gelöste Position (D) bewegt.

10. System nach Anspruch 8, wobei die Freigabebetätigungselemente (560.1, 560.2) jeweils an dem Eingriffsabschnitt (532.1, 532.2) der Eingriffsmittels (530.1, 530.2) angeordnet sind.

11. System nach einem der Ansprüche 5 bis 9, wobei
das erste und das zweite Eingriffsmittel (530.1, 530.2) ein Führungselement (700.1, 700.2) zum Führen der Position des Beleuchtungsmoduls (200) relativ zu dem Sockelmodul (300) während der Montage des Beleuchtungsmoduls (200) auf dem Sockelmodul (300) aufweist, wobei das Führungselement (700.1, 700.2) eine Vorderseite (701) und eine Rückseite (702) aufweist und so an den Eingriffselementen (530.1, 530.2) angeordnet ist, dass wenn die Eingriffsmittel (530.1, 530. 2) in Position (A) sind, die Vorderseite (701) von der Mittelachse (Q) des Beleuchtungsmoduls (200) abgewandt ist und die Rückseite der Mittelachse (Q) des Beleuchtungsmoduls (200) zugewandt ist, und wenn die Eingriffsmittel (530.1, 530.2) in Position (B) sind, die Vorderseite (701) dem vorderen Abschnitt (211) des Beleuchtungsmoduls (200) zugewandt ist und die Rückseite (702) dem hinteren Teil (212) des Sockelmoduls (100) zugewandt ist.

12. System nach Anspruch 11, wobei das Führungselement (700.1, 700.2) eine Platte ist und an dem Eingriffsabschnitt (532.1, 532.2) des Eingriffsmittels (530.1, 530.1) angebracht ist und sich im Wesentlichen vertikal nach unten erstreckt.

13. System nach Anspruch 11 oder 12, wobei
das Führungselement (700.1, 700.2) so ausgestaltet ist, dass bei der Montage des Beleuchtungsmoduls (200) auf dem Sockelmodul (300) die Rückseite (702) des Führungselements (700.1, 700.2) zumindest teilweise eine vordere Auflagefläche (325) des Sockelmoduls (300) berühren kann, wodurch verhindert wird, dass der vordere Teil (211) des Beleuchtungsmoduls (200) das Sockelmodul (300) berührt.

14. System nach einem der Ansprüche 1 bis 13, das für den Austausch einer modularen Straßenbeleuchtungsleuchte konfiguriert ist und bei dem der Leuchtenträger (400) ein Laternenpfahl ist.

## Revendications

1. Système pour le remplacement aéroporté d'un luminaire d'éclairage modulaire, ledit système comprenant un luminaire d'éclairage (100) comprenant un module d'éclairage (200) et un module de prise (300) configurés pour être connectés de manière libérable l'un à l'autre, dans lequel
- le module de prise (300) comprend une prise (310) configurée pour être fixée à un support de luminaire (400) et une partie de réception (320) configurée pour être reçue dans un espace de réception (250) du module d'éclairage (200) et un contact électrique (360) configuré pour être connecté à une source de courant électrique ;
- le module d'éclairage (200) comprend un boîtier allongé (210) ayant un côté supérieur (213) et un côté inférieur (214) ; et une portion avant (211) ayant une source de lumière (220) et une portion arrière (212) ayant l'espace de réception (250) pour recevoir de manière libérable la partie de réception (320) du module de prise (300) connectant ainsi le module d'éclairage (200) au module de prise (300) et un contact électrique (260) connecté à la source de lumière (220) et dans lequel
- le module d'éclairage (200) comprend des moyens de verrouillage (240.1, 240.2) libérables, agencés dans le boîtier (210) pour verrouiller de manière libérable le module d'éclairage (200) au module de prise (300) ;
**caractérisé en ce que** le système comprend en outre :
un véhicule aérien sans pilote (500) configuré pour être commandé à distance et comprenant des moyens de mise en prise (530.1, 530.2) configurés pour venir en prise avec le module d'éclairage (200) de sorte que le véhicule aérien sans pilote (500) puisse déconnecter le module d'éclairage (200) du module de prise (300) ou connecter le module d'éclairage (200) au module de prise (300), et **en ce que**
les moyens de mise en prise (530.1, 530.2) du véhicule aérien sans pilote (500) sont configurés pour libérer les moyens de verrouillage (240.1, 240.2) d'une mise en prise de verrouillage avec le module de prise (300) .

2. Système selon la revendication 1, dans lequel la partie de réception (320) du module de prise (300) comprend un côté inférieur (322) et dans lequel les moyens de verrouillage (240.1, 240.2), dans un état de mise en prise de verrouillage avec le module de prise (300), reposent sur le côté inférieur (322) de la partie de réception (320) et, dans un état libéré, ne sont pas en contact avec le côté inférieur de la partie de réception (320).

3. Système selon la revendication 1 ou 2, dans lequel le véhicule aérien sans pilote (500) comprend un premier et un second moyen de mise en prise (530.1, 530.2), dans lequel
- les moyens de mise en prise (530.1, 530.2) sont agencés sur des côtés opposés du véhicule aérien sans pilote (500) et comprennent une portion de mise en prise (532.1, 532.2) allongée pour mettre en prise le côté inférieur (214) du module d'éclairage (200), dans lequel
- les moyens de mise en prise (530.1, 530.2) sont agencés pour être pivotés autour d'un axe de pivot vertical (Y) respectif d'une position (A) dans laquelle les portions de mise en prise (532.1, 532.2) s'étendent à l'extérieur du côté inférieur (214) du module d'éclairage (200) à une position (B), dans laquelle les portions de mise en prise (532.1, 532.2) s'étendent au moins partiellement sur le côté inférieur (214) du module d'éclairage (200) et viennent ainsi en prise avec le module d'éclairage (200).

4. Système selon la revendication 3, dans lequel le véhicule aérien sans pilote (500) comprend un premier et un second arbre de rotation vertical (533.1, 533.2), formant l'axe de pivot (Y), qui sont agencés pour coupler de manière pivotante les moyens de mise en prise (530.1, 530.2) au véhicule aérien sans pilote (500) et une unité d'entraînement (534.1, 534.2) pour faire pivoter les moyens de mise en prise (530.1, 530.2) autour de l'axe de rotation (Y) respectif.

5. Système selon la revendication 4, dans lequel les moyens de mise en prise (530.1, 530.2) sont fixés au premier et au second arbre de rotation vertical (533.1, 533.2) respectifs et dans lequel l'unité d'entraînement (534.1, 534.2) est agencée pour mettre en rotation le premier et le second arbre de rotation vertical (533.1, 533.2).

6. Système selon la revendication 4, dans lequel les moyens de mise en prise (530.1, 530.2) sont tourillonnés sur le premier et le second arbre de rotation (533.1, 533.2) respectifs et dans lequel l'unité d'entraînement (534.1, 534.2) est agencée pour mettre en rotation le premier et le second moyen de mise en prise (530.1, 530.2) autour du premier et du second arbre de rotation vertical (533.1, 533.2).

7. Système selon l'une quelconque des revendications 3 à 6, dans lequel les moyens de mise en prise (530.1, 530.2) comprennent, respectivement, une portion de tige allongée (531.1, 531.2) et une portion de mise en prise (532.1, 532.2) qui s'étend de manière sensiblement orthogonale par rapport à la portion de tige (531.1, 531.2) et est configurée pour au moins partiellement s'étendre sur le côté inférieur (214) du module d'éclairage (200) dans la position (B).

8. Système selon l'une quelconque des revendications 5 ou 7, dans lequel les portions de mise en prise (532.1, 532.2) sont aptes à pivoter dans un plan qui est parallèle à un axe central longitudinal P du véhicule aérien sans pilote (500) et orthogonal à un axe central vertical R du véhicule aérien sans pilote (500).

9. Système selon l'une quelconque des revendications 5 à 8, dans lequel
- le module d'éclairage (200) comprend un premier et un second moyen de verrouillage (240.1, 240.2) respectivement mobiles entre une position verrouillée (C) dans laquelle les moyens de verrouillage (240.1, 240.1) sont en prise de verrouillage avec un côté inférieur (322) du module de prise (300) et une position libérée (D) dans laquelle les moyens de verrouillage (240.1, 240.2) ne sont pas en prise avec le côté inférieur (322) du module de prise (300) et dans lequel
- les moyens de mise en prise (530.1, 530.2) comprennent respectivement un actionneur de libération (560.1, 560.2) qui est agencé pour déplacer les moyens de verrouillage (240.1, 240.2) de la position verrouillée (C) à la position libérée (D).

10. Système selon la revendication 8, dans lequel les actionneurs de libération (560.1, 560.2) sont respectivement agencés sur la portion de mise en prise (532.1, 532.2) des moyens de mise en prise (530.1, 530.2) .

11. Système selon l'une quelconque des revendications 5 à 9, dans lequel le premier et le second moyen de mise en prise (530.1, 530.2) comprennent un élément de guidage (700.1, 700.2) pour guider la position du module d'éclairage (200) par rapport au module de prise (300) au cours du montage du module d'éclairage (200) sur le module de prise (300), dans lequel l'élément de guidage (700.1, 700.2) possède une face avant (701) et une face arrière (702) et est agencé sur les éléments de mise en prise (530.1, 530.2) de sorte que, lorsque les moyens de mise en prise (530.1, 530.2) sont dans la position (A), la face avant (701) soit orientée de manière opposée à l'axe central (Q) du module d'éclairage (200) et la face arrière soit orientée face à l'axe central (Q) du module d'éclairage (200), et lorsque les moyens de mise en prise (530.1, 530.2) sont dans la position (B), la face avant (701) soit orientée face à la portion avant (211) du module d'éclairage (200) et la face arrière (702) soit orientée face à la portion arrière (212) du module de prise (100).

12. Système selon la revendication 11, dans lequel l'élément de guidage (700.1, 700.2) est une plaque et est fixé à, et s'étend sensiblement verticalement vers le bas à partir de, la portion de mise en prise (532.1, 532.2) des moyens de mise en prise (530.1, 530.1).

13. Système selon la revendication 11 ou 12, dans lequel l'élément de guidage (700.1, 700.2) est configuré de sorte que, au cours du montage du module d'éclairage (200) sur le module de prise (300), la face arrière (702) de l'élément de guidage (700.1, 700.2) puisse au moins partiellement être en contact avec une surface de support avant (325) du module de prise (300), ce qui empêche la portion avant (211) du module d'éclairage (200) d'être en contact avec le module de prise (300).

14. Système selon l'une quelconque des revendications 1 à 13, configuré pour le remplacement d'un luminaire d'éclairage de rue modulaire et dans lequel le support de luminaire (400) est un lampadaire.
